# EUROPEAN PATENT APPLICATION

(11) **EP 4 804 310 A1**
(43) Date of publication of application: **09.09.2026**
(21) Application number: 24884286.6
(22) Date of filing: 19.09.2024
(51) Int. Cl.: H01M 50/204

(54) **BATTERY ASSEMBLY, BATTERY PACK AND ELECTRIC SYSTEM**

(30) Priority: 31.10.2023 CN 202311438985
(71) Applicant: BYD Company Limited, Shenzhen, Guangdong 518118 (CN)
(72) Inventor: SUN, Zenan, Shenzhen, Guangdong 518118 (CN); ZHOU, Dongjie, Shenzhen, Guangdong 518118 (CN); LIU, Xufeng, Shenzhen, Guangdong 518118 (CN); TAN, Zhijia, Shenzhen, Guangdong 518118 (CN); ZHU, Yan, Shenzhen, Guangdong 518118 (CN)
(74) Representative: Mathys & Squire
(86) International application number: PCT/CN2024/119661
(87) International publication number: WO 2025/092279

(57) **Abstract**

A battery assembly (100), a battery pack (300), and an electric system (400). The battery assembly (100) comprises a plurality of battery cells (10) stacked in a vertical direction, and further comprises supporting members (20) and bonding members (30). Any battery cell surface between two adjacent battery cells (10) is a first surface (11), and supporting members (20) and bonding members (30) are provided on the first surface (11); the supporting members (20), the bonding members (30) and the first surface (11) together define a clearance region (111) located on the first surface (11), and the area ratio of the area of the clearance region (111) to the area of the first surface (11) is within 3:20 to 18:25.

## Description

### CROSS-REFERENCE TO RELATED APPLICATIONS

The present disclosure claims priority to Chinese Patent Application No. 202311438985.1 filed on October 31, 2023, and entitled " BATTERY ASSEMBLY, BATTERY PACK AND ELECTRIC SYSTEM", which is incorporated herein by reference in its entirety.

### FIELD

The present disclosure relates to the technical field of power batteries, and in particular to a battery assembly, a battery pack and a power system.

### BACKGROUND

A battery assembly may be formed by stacking a plurality of battery cells in a vertical direction, and the plurality of battery cells are connected in series or in parallel to provide all or a main power source for a vehicle. As a key component of an electric vehicle, the performance and service life of the battery assembly are critical.

In the prior art, stacked battery cells are typically fastened directly by tying straps around peripheries of the plurality of battery cells, thereby ensuring stability of the battery assembly. However, after a long-term charge-discharge cycle of the battery assembly, each battery cell expands to a certain extent, and the accumulated expansion force of the plurality of battery cells after expansion is considerable, which may cause the straps to break, consequently leading to detachment between the battery cells and affecting the performance and service life of the battery assembly; or the battery cells may squeeze each other, thereby causing a lithium plating phenomenon, which also adversely affects the performance and service life of the battery assembly.

### SUMMARY

In view of the above shortcomings of the prior art, an object of the present disclosure is to provide a battery assembly, a battery pack and an electric system, so as to provide a certain expansion space for expansion and improve the performance and service life of the battery assembly.

In a first aspect, the present disclosure provides a battery assembly, which includes a plurality of battery cells stacked in a vertical direction, and further includes supporting members and bonding members, wherein a surface of one of two adjacent battery cells is a first surface, the first surface has a clearance region, and a geometric center of the first surface is located within the clearance region. The supporting members and the bonding members are provided on the first surface, and edges of the supporting members and the bonding members that are close to the geometric center of the first surface coincide with a part of a periphery of the clearance region. Extension lines of edges of each supporting member and each bonding member that are close to the geometric center of the first surface intersect each other to define first intersection points, and/or extension lines of edges of any one of each supporting member and each bonding member that are close to the geometric center of the first surface intersect an edge of the first surface to define second intersection points. Especially, if the intersection points are all the second intersection points, the clearance region is a region enclosed by connecting the plurality of second intersection points. Especially, if the intersection points comprise several first intersection points and several second intersection points, and the first intersection points are configured to be sequentially connected to define a closed figure on the first surface, the clearance region is a region enclosed by connecting the plurality of first intersection points. Especially, if the intersection points comprise several first intersection points and several second intersection points, and the first intersection points are configured not to be sequentially connected to define a closed figure on the first surface, the clearance region is a region enclosed by sequentially connecting all the first intersection points and the several second intersection points. Especially, an area ratio of the clearance region to the first surface is in a range of 3:20 to 18:25.

In the battery assembly of the present disclosure, the plurality of battery cells stacked in the vertical direction are arranged for supplying electric energy. Meanwhile, supporting members are arranged between adjacent battery cells for supporting the adjacent battery cells. The battery assembly of the present disclosure further includes bonding members arranged between adjacent battery cells for limiting relative displacement between the adjacent battery cells, thereby preventing separation between the adjacent battery cells.

It will be understood that, in the battery assembly of the present disclosure, by disposing the supporting members and the bonding members on the first surface and cooperating with the first surface to together define the clearance region located on the first surface, relative fixation between two adjacent battery cells is ensured, thereby preventing detachment between the stacked adjacent battery cells. Meanwhile, a gap is created between opposing surfaces of the adjacent battery cells to provide a reserved expansion space, thereby preventing the adjacent battery cells from squeezing each other due to excessive expansion force. At the same time, by setting the area ratio of the clearance region to the surface of one of the battery cells within a range of 3:20 to 18:25, reliability of the reserved expansion space for expansion is ensured, which can thus accommodate expansion of the battery cells after a plurality of charge-discharge cycles, improving the performance and service life of the battery assembly.

In one embodiment, the area ratio of the clearance region to the first surface is in a range of 1:5 to 11:20.

In one embodiment, each battery cell includes a first side wall, the first side walls of all the battery cells are located on a same side of the battery assembly, the first side wall is perpendicular to the first surface, the battery cell includes an electrode terminal, the electrode terminal is provided on the first side wall, the supporting member includes a first supporting member, and the first supporting member is provided close to the first side wall.

In this embodiment, the electrode terminal is provided on the first side wall perpendicular to the first surface, serving as a power output terminal. Meanwhile, since a side of the battery cell where the electrode terminal is provided has a relatively larger weight, the first supporting member is provided at a position close to the first side wall, ensuring that the reserved expansion space is relatively reliable.

In one embodiment, the number of the electrode terminals is two, the two electrode terminals are spaced apart along a length direction of the battery assembly; the number of the supporting members is one, the first supporting member includes two ends along the length direction of the battery assembly, and distances from the two ends of the first supporting member to the two electrode terminals are respectively equal.

In this embodiment, since the electrode terminals on the same side, i.e., electrode terminals of the same polarity, of adjacent battery cells along the vertical direction are connected by a connecting plate, and the two electrode terminals of the battery cell are provided at opposite ends of the first side wall along the length direction of the battery assembly, by setting the distances from the two ends of the first supporting member along the length direction of the battery assembly to the two electrode terminals to be respectively equal, i.e., disposing the supporting member at a middle position of the battery cell along the length direction of the battery assembly, distortion of the connecting plate caused by local squeezing of the battery cell is prevented.

In one embodiment, the number of the bonding members is two, and the two bonding members are spaced apart along the length direction of the battery assembly; an extension line of an edge of each bonding member that is close to the geometric center of the first surface has an included angle with an extension line of an edge of the first supporting member that is close to the geometric center of the first surface, and the included angle is in a range of 60° to 100°.

In this embodiment, by spacing the two bonding members apart along the length direction of the battery assembly, and simultaneously setting the included angle between the extension line of the edge of the bonding member close to the geometric center of the first surface and the extension line of the edge of the first supporting member close to the geometric center of the first surface to be in a range of 60° to 100°, reliable bonding of opposing surfaces between two adjacent battery cells by the bonding members is ensured, thereby ensuring overall bonding reliability between the two adjacent battery cells.

In one embodiment, the first side wall is located at one end of the battery cell in a width direction of the battery assembly; along the width direction of the battery assembly, the first supporting member is provided on a side of the clearance region close to the first side wall; along the length direction of the battery assembly, one bonding member is respectively provided on each of two opposite sides of the clearance region in the length direction of the battery assembly, and the two bonding members are respectively in contact with the first supporting member.

In this embodiment, by disposing the first supporting member on the side of the clearance region close to the first side wall along the width direction of the battery assembly, and simultaneously disposing bonding members respectively on two opposite sides of the clearance region along the length direction of the battery assembly, and making the two bonding members respectively contact the first supporting member, reliability of the reserved expansion space provided by the clearance region is enhanced.

In one embodiment, projections of the first supporting member and the bonding members on the first surface are each rectangular, and a length direction of the first supporting member is perpendicular to a length direction of the bonding members.

In this embodiment, by setting the projections of the first supporting member and the bonding members on the first surface to be each rectangular, and simultaneously setting the length direction of the first supporting member to be perpendicular to the length direction of the bonding members, a shape of the clearance region is relatively regular, optimizing layout of the supporting members and the bonding members, and improving reliability of the clearance region.

In one embodiment, along the width direction of the battery assembly, the battery cell has a second side wall opposite to the first side wall and the second side wall is connected to the first surface and arranged perpendicular thereto.

An extension line of an edge of the supporting member close to the geometric center of the first surface intersects the extension lines of the edges of the two bonding members close to the geometric center of the first surface to define two first intersection points, the extension lines of the edges of the two bonding members close to the geometric center of the first surface intersect an edge connected to the second side wall to define two second intersection points, and the clearance region is a region defined on the first surface by connecting the two first intersection points and the two second intersection points.

In one embodiment, a ratio of a sum of projection areas of all the supporting members on the surface of the battery cell to the area of the surface of the battery cell is in a range of 0.1% to 10%.

In this embodiment, by setting the ratio of the sum of the projection areas of the supporting members on the surface of the battery cell to the area of the surface of the battery cell within a range of 0.1% to 10%, the supporting effect of the supporting members is ensured, guaranteeing reliability of the reserved expansion space.

In one embodiment, a ratio of a sum of projection areas of all the bonding members on the surface of the battery cell to the area of the surface of the battery cell is in a range of 20% to 70%.

In this embodiment, by setting the ratio of the sum of the projection areas of the bonding members on the surface of the battery cell to the area of the surface of the battery cell within a range of 20% to 70%, the bonding effect of the bonding members is ensured, guaranteeing reliability of the reserved expansion space.

In one embodiment, a ratio of a sum of projection areas of all the supporting members on the surface of the battery cell to the area of the surface of the battery cell is in a range of 0.1% to 10%; a ratio of a sum of projection areas of all the bonding members on the surface of the battery cell to the area of the surface of the battery cell is in a range of 20% to 70%.

In this embodiment, by setting the ratio of the sum of the projection areas of the supporting members on the surface of the battery cell to the area of the surface of the battery cell within a range of 0.1% to 10%, and simultaneously setting the ratio of the sum of the projection areas of the bonding members on the surface of the battery cell to the area of the surface of the battery cell within a range of 20% to 70%, in one aspect, the sum of the projection areas of the bonding members on the surface of the battery cell is larger than the sum of the projection areas of the supporting members on the surface of the battery cell, thereby ensuring that an adhesive force of the bonding members to the battery cell is greater than a supporting force of the supporting members to the battery cell, so as to ensure stability of stacking between adjacent battery cells and prevent detachment between adjacent battery cells. In another aspect, it prevents the area occupied by the bonding members on the surface of the battery cell from being too large, which would result in insufficient reserved expansion space, affecting heat dissipation and increasing cost.

In one embodiment, a height of the supporting members is greater than or equal to a height of the bonding members, wherein the height is a dimension in the vertical direction.

In this embodiment, by setting the height of the supporting members to be slightly greater than or equal to the height of the bonding members, it is ensured that a sufficiently large reserved expansion space is provided in an early stage of the life cycle of the battery cells, preventing the battery cells from being squeezed in the early stage of their life cycle, which would affect the service life of the battery cells.

In one embodiment, the number of the supporting members is one, and along the length direction of the battery assembly, a ratio of the length of the supporting member to a length of the first side wall is in a range of 2:5 to 7:10.

In this embodiment, by setting the ratio of the length of the supporting member to the length of the first side wall along the length direction of the battery assembly within a range of 2:5 to 7:10, the supporting effect of the supporting member is ensured, while cost can be reduced.

In one embodiment, a ratio of a distance from a geometric center of the supporting member to the first side wall to a distance from the geometric center of the supporting member to the geometric center of the surface of the battery cell is in a range of 0 to 4:5.

In this embodiment, by setting the ratio of the distance from the geometric center of the supporting member to the first side wall to the distance from the geometric center of the supporting member to the geometric center of the surface of the battery cell within a range of 0 to 4:5, it is ensured that the position of the supporting member is relatively far from the geometric center of the surface of the battery cell, thereby ensuring that a sufficient reserved expansion space is provided in a central region of the surface of the battery cell.

In one embodiment, along the length direction of the first side wall, a ratio of a distance from a geometric center of the bonding member to a side wall relatively close thereto to a distance from the geometric center of the bonding member to the geometric center of the surface of the battery cell is in a range of 0 to 17:20.

In this embodiment, by setting the ratio of the distance from the geometric center of the bonding member to the side wall relatively close thereto to the distance from the geometric center of the bonding member to the geometric center of the surface of the battery cell within a range of 0 to 17:20, it is ensured that the relative position of the bonding member is far from the geometric center of the surface of the battery cell, thereby ensuring that a sufficient reserved expansion space is provided in the central region of the surface of the battery cell.

In one embodiment, the battery assembly further includes filling glue and the filling glue is provided between two adjacent battery cells.

In one embodiment, the battery cell comprises a second side wall opposite to the first side wall, the filling glue being provided close to the second side wall.

In these embodiments, by disposing filling glue between adjacent battery cells and disposing it close to the second side wall opposite to the first side wall, the filling glue cooperates with the supporting member to support the stacked two adjacent battery cells, enhancing supporting stability. Meanwhile, based on the filling glue having a certain viscosity, the filling glue can also assist the bonding members in limiting relative displacement between adjacent battery cells.

In one embodiment, a ratio of an area enclosed by the supporting member, the bonding members, and the filling glue on the surface of the battery cell to the area of the surface of the battery cell is in a range of 1:5 to 11:20.

In this embodiment, based on the fact that the supporting member, the bonding members, and the filling glue are all elongated, by setting the ratio of the area enclosed by the supporting member, the bonding members, and the filling glue on the surface of the battery cell to the area of the surface of the battery cell within a range of 1:5 to 11:20, a sufficient reserved expansion space is provided while further improving adhesive force between adjacent battery cells.

In a second aspect, the present disclosure provides a battery pack, which includes the battery assembly according to any one of the above embodiments.

In a third aspect, the present disclosure provides an electric system, which includes the battery assembly according to any one of the above embodiments or includes the battery pack as described above.

### BRIEF DESCRIPTION OF THE DRAWINGS

To explain the technical solutions in the embodiments of the present disclosure more clearly, the accompanying drawings required for describing the embodiments are briefly introduced below. Apparently, the accompanying drawings in the following description are some embodiments of the present disclosure. For those of ordinary skill in the art, other drawings can be derived from these drawings without creative efforts.
FIG. 1 is a schematic structural view of a vehicle according to an embodiment of the present disclosure;
FIG. 2 is a schematic planar structural view of one side of a battery assembly according to an embodiment of the present disclosure;
FIG. 3 is a schematic planar structural view of the other side of the battery assembly according to an embodiment of the present disclosure;
FIG. 4 is a schematic planar structural view of one side of a battery assembly according to another embodiment of the present disclosure;
FIG. 5 is a schematic planar structural view of one side of a battery assembly according to another embodiment of the present disclosure;
FIG. 6 is a schematic planar structural view of one side of a battery assembly according to another embodiment of the present disclosure;
FIG. 7 is a schematic planar structural view of one side of a battery assembly according to another embodiment of the present disclosure;
FIG. 8 is a schematic planar structural view of one side of a battery assembly according to another embodiment of the present disclosure;
FIG. 9 is a schematic planar structural view of one side of a battery assembly according to another embodiment of the present disclosure;
FIG. 10 is a structural block diagram of a battery pack according to an embodiment of the present disclosure;
FIG. 11 is a structural block diagram of an electric system according to an embodiment of the present disclosure;
FIG. 12 is a structural block diagram of an electric system according to another embodiment of the present disclosure.

Description of reference numerals: 200: vehicle; 201: vehicle body; 100: battery assembly; 10: battery cell; 11: first surface; 111: clearance region; 12: side wall; 12a: first side wall; 12b: second side wall; 12c: third side wall; 12d: fourth side wall; 13: electrode terminal; 14: explosion-proof valve; 15: first intersection point; 16: second intersection point; 20: supporting member; 20a: first supporting member; 30: bonding member; 40: filling glue; 001: first direction; 002: second direction; 003: third direction; 300: battery pack; 400: electric system.

### DETAILED DESCRIPTION

To facilitate understanding of the present disclosure, a more comprehensive description of the present disclosure will be provided below with reference to the accompanying drawings. Preferred embodiments of the present disclosure are shown in the accompanying drawings. However, the present disclosure may be embodied in many different forms and is not limited to the embodiments described herein. On the contrary, these embodiments are provided to make the disclosure of the present disclosure more thorough and comprehensive.

The descriptions of the following embodiments refer to the accompanying drawings to illustrate specific embodiments in which the present disclosure may be practiced. The serial numbers assigned to components herein, such as "first", "second", etc., are only used to distinguish the described objects and do not have any sequential or technical meaning. The terms "connected", "coupled" used in the present disclosure, unless otherwise specified, include both direct and indirect connection (coupling). Directional terms used in the present disclosure, such as "upper", "lower", "front", "rear", "left", "right", "inner", "outer", "side", etc., are only directions with reference to the accompanying drawings. Therefore, the directional terms are used for better and clearer explanation and understanding of the present disclosure, rather than indicating or implying that the device or element referred to must have a specific orientation, be constructed and operated in a specific orientation, and thus cannot be construed as limiting the present disclosure.

In the description of the present disclosure, it will be noted that, unless otherwise expressly specified and limited, the terms "mounted", "connected", and "coupled" will be understood in a broad sense. For example, they may be fixed connections, detachable connections, or integral connections; they may be mechanical connections; they may be direct connections, or indirect connections through an intermediary, or internal communication between two elements. For those of ordinary skill in the art, the specific meanings of the above terms in the present disclosure will be understood according to specific circumstances. It will be noted that the terms "first", "second", etc. in the specification, claims and drawings of the present disclosure are used to distinguish different objects, rather than to describe a specific order. In addition, the terms "include", "may include", "comprise", or "may comprise" used in the present disclosure indicate the existence of corresponding functions, operations, elements, etc. disclosed, and do not limit one or more additional functions, operations, elements, etc. Furthermore, the terms "include" or "comprise" indicate the existence of corresponding features, numbers, steps, operations, elements, components or combinations thereof disclosed in the specification, but do not exclude the presence or addition of one or more other features, numbers, steps, operations, elements, components or combinations thereof, and are intended to cover non-exclusive inclusion.

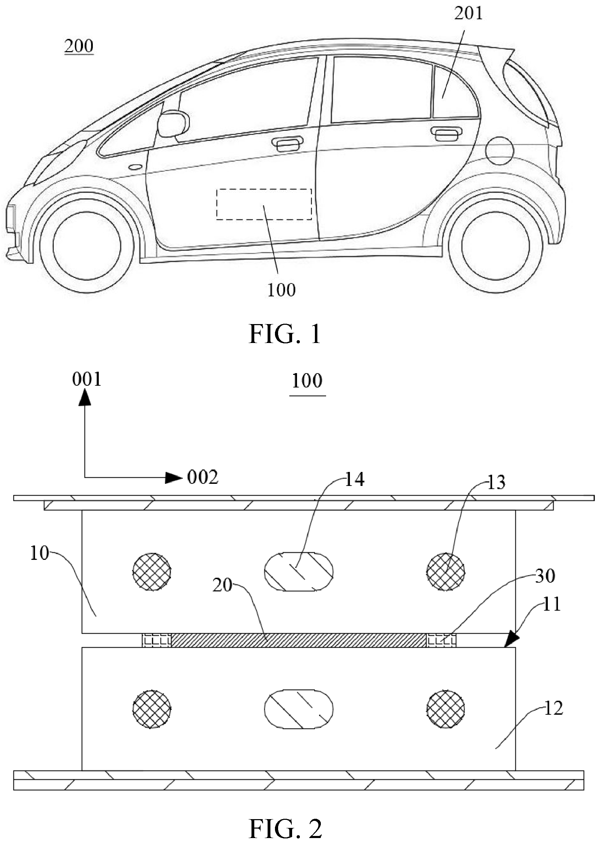

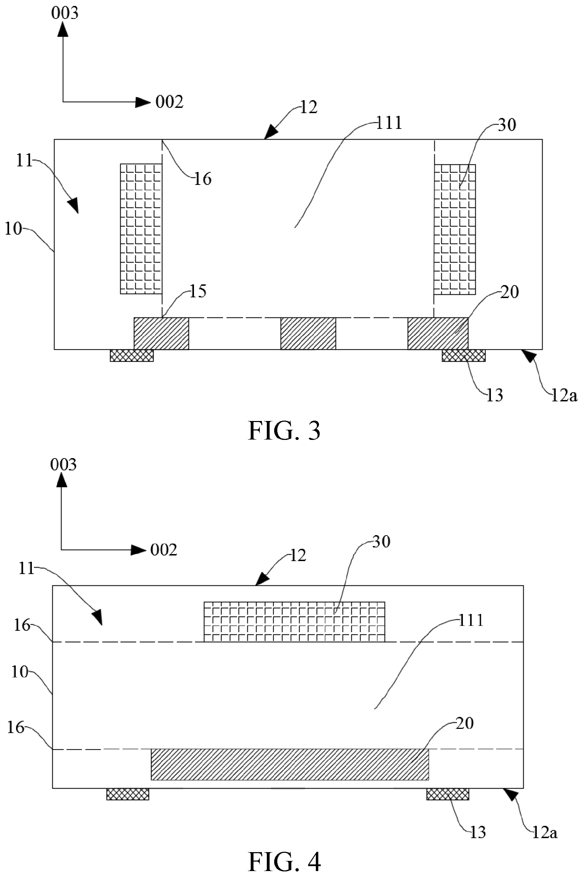

Reference is made to FIG. 2, which is a schematic planar structural view of one side of a battery assembly 100 according to an embodiment of the present disclosure, and reference is also made to FIG. 3, which is a schematic planar structural view of the other side of the battery assembly 100 according to an embodiment of the present disclosure.

As shown in FIG. 2 and FIG. 3, the battery assembly 100 of the present disclosure includes battery cells 10, supporting members 20, and bonding members 30. In an embodiment of the present disclosure, the battery cell 10 is a prismatic battery cell, i.e., the shape of the battery cell 10 is a hexahedron. The battery cell 10 includes an upper surface and a lower surface oppositely provided along a first direction 001. The first direction 001 is the vertical direction. The number of the battery cells 10 is two, and the two battery cells 10 are stacked along the first direction 001. That is, the vertical direction in the present disclosure also refers to the stacking direction of the two or more battery cells 10. To ensure stability of the stacked battery cells 10, the battery assembly 100 performs stacking through the surfaces of the battery cells 10 having a larger area. Specifically, the upper surface and the lower surface of the battery cell 10 have a significantly larger area compared to other side surfaces. For ease of description, the upper surface and the lower surface of the battery cell 10 are defined as major surfaces of the battery cell 10, and a major surface of any one of the battery cells 10 is referred to as a first surface 11.

In an embodiment disclosed in the present disclosure, the battery cell 10 further includes an electrode terminal 13 and an explosion-proof valve 14, and the electrode terminal 13 and the explosion-proof valve 14 are both provided on one of side walls 12 of the battery cell 10. Specifically, the explosion-proof valve 14 is provided at a middle portion of the side wall 12 along a length direction of the battery assembly 100, that is, provided at a middle portion of the first side wall 12a. The length direction of the battery assembly 100 is a second direction 002 shown in FIG. 2 and FIG. 3, and is perpendicular to the vertical direction, i.e., the first direction 001, of the battery assembly 100. The number of the electrode terminals 13 is two, and the two electrode terminals 13 are provided on opposite sides of the explosion-proof valve 14 along the length direction of the battery assembly 100. Distances from the two electrode terminals 13 to the explosion-proof valve 14 are equal. The first side wall 12a is perpendicular to the first surface 11 of the battery cell 10. The electrode terminal 13 may serve as a power output terminal to output electric energy stored in the battery cell 10. The explosion-proof valve 14 may be used for pressure relief and exhaust to prevent the battery cell 10 from exploding due to gas expansion. In another embodiment disclosed in the present disclosure, the electrode terminal 13 and the explosion-proof valve 14 are respectively arranged on different side walls 12 of the battery cell 10, the side walls 12 being connected to the upper surface and the lower surface. The side wall 12 on which the electrode terminal 13 is provided is the first side wall 12a.

Furthermore, in the embodiments disclosed in the present disclosure, one of opposing surfaces of two adjacent battery cells 10 along the stacking direction is the first surface 11, and the supporting members 20 and the bonding members 30 are provided on the first surface 11. The battery assembly 100 of the present disclosure further includes a clearance region 111 located on the first surface 11, and the geometric center of the first surface 11 is located within the clearance region 111. Edges of the supporting members 20 and the bonding members 30 that are close to the geometric center of the first surface 11 coincide with a part of a periphery of the clearance region 111. That is, the clearance region 111 is defined by the supporting members 20 and the bonding members 30. Alternatively, it will be understood that the clearance region 111 is defined on the first surface 11 by cooperation of the supporting members 20, the bonding members 30 and the first surface 11. In other words, the clearance region 111 of the present disclosure is a region enclosed on the first surface 11 by intersection of extension lines of edges of each supporting member 20 and each bonding member 30 that are close to the geometric center of the first surface 11 with each other and/or intersection of extension lines of edges of each supporting member 20 and each bonding member 30 that are close to the geometric center of the first surface 11 with edges of the first surface 11.

That is, if extension lines of edges of a supporting member 20 or a bonding member 30 close to the geometric center of the first surface 11 intersect with those of other supporting members 20 or bonding members 30 and can enclose a closed figure on the first surface 11, then the clearance region 111 is a region enclosed on the first surface 11 by intersection of the extension lines of edges of the plurality of supporting members 20 or bonding members 30 close to the geometric center of the first surface 11 with each other. If extension lines of edges of a supporting member 20 or a bonding member 30 close to the geometric center of the first surface 11 intersect with those of other supporting members 20 or bonding members 30 but cannot enclose a closed figure on the first surface 11, then the clearance region 111 is a region enclosed on the first surface 11 by intersection of the extension lines of edges of the plurality of supporting members 20 or bonding members 30 close to the geometric center of the first surface 11 with each other and with edges of the first surface 11. If extension lines of edges of a supporting member 20 or a bonding member 30 close to the geometric center of the first surface 11 do not intersect with those of other supporting members 20 or bonding members 30, then the clearance region 111 is a region enclosed on the first surface 11 by intersection of the extension lines of edges of the supporting members 20 and the bonding members 30 close to the geometric center of the first surface 11 with edges of the first surface 11. An area ratio of the clearance region 111 to the first surface 11 is in a range of 3:20 to 18:25. It will be noted that this region excludes the area occupied by the supporting members 20 and the bonding members 30 themselves on the first surface 11. For ease of understanding, the present disclosure provides the following embodiments to illustrate the clearance region 111.

In the embodiment shown in FIG. 3, projections of the supporting members 20 and the bonding members 30 on the first surface 11 are each rectangular. The number of the supporting members 20 is three, and the number of the bonding members 30 is two. The two bonding members 30 are spaced apart along the second direction 002, i.e., the length direction of the battery assembly 100, on opposite sides of the geometric center of the first surface 11. Each supporting member 20 is arranged close to the first side wall 12a. Extension lines of edges of a relatively close supporting member 20 and a bonding member 30 that are close to the geometric center of the first surface 11 intersect each other to define a first intersection point 15, and extension lines of edges of the two bonding members 30 that are close to the geometric center of the first surface 11 intersect edges of the first surface 11 respectively to define second intersection points 16. The three supporting members 20 are connected to each other and sequentially connected with the first intersection point 15 and the second intersection points 16 in a clockwise direction or a counterclockwise direction to enclose and define the clearance region 111. That is, the clearance region 111 at this time is a region enclosed by the dashed line portion in FIG. 3 together with the supporting members 20, the bonding members 30, and the edges of the first surface 11.

In the present disclosure, adjacent first intersection points 15 and/or second intersection points 16 are connected by straight lines.

In the present disclosure, the first intersection points 15 and the second intersection points 16 each refer to first-time intersection points. That is, when extension lines of edges of a relatively close supporting member 20 and a bonding member 30 that are close to the geometric center of the first surface 11 intersect each other, and it is the first intersection in the extension direction of the extension lines, it can be considered as defining a first intersection point 15. For another example, when an extension line of a supporting member 20 or a bonding member 30 extends in a certain direction and intersects an edge of the first surface 11, and it is the first intersection, it can be considered as defining a second intersection point 16. When an extension line of a supporting member 20 has already intersected a bonding member 30 in a certain direction, even if the extension line of the supporting member 20 continues to extend in that direction and would intersect an edge of the first surface 11, it is not considered as defining a second intersection point 16 at that time.

As shown in FIG. 4, in one embodiment, projections of the supporting member 20 and the bonding members 30 on the first surface 11 are each rectangular. The numbers of the supporting member 20 and the bonding members 30 are one each. The supporting member 20 is relatively close to the first side wall 12a, and both the supporting member 20 and the bonding member 30 extend along the second direction 002, i.e., the length direction of the battery assembly 100. An extension line of an edge of the supporting member 20 close to the geometric center of the first surface 11 intersects an edge of the first surface 11 to define a second intersection point 16, and an extension line of an edge of the bonding member 30 close to the geometric center of the first surface 11 also intersects an edge of the first surface 11 to define a second intersection point 16. The second intersection points 16 are sequentially connected to define the clearance region 111. That is, the clearance region 111 at this time is a region enclosed by the dashed line portion in FIG. 4 together with the supporting member 20, the bonding member 30, and the edges of the first surface 11.

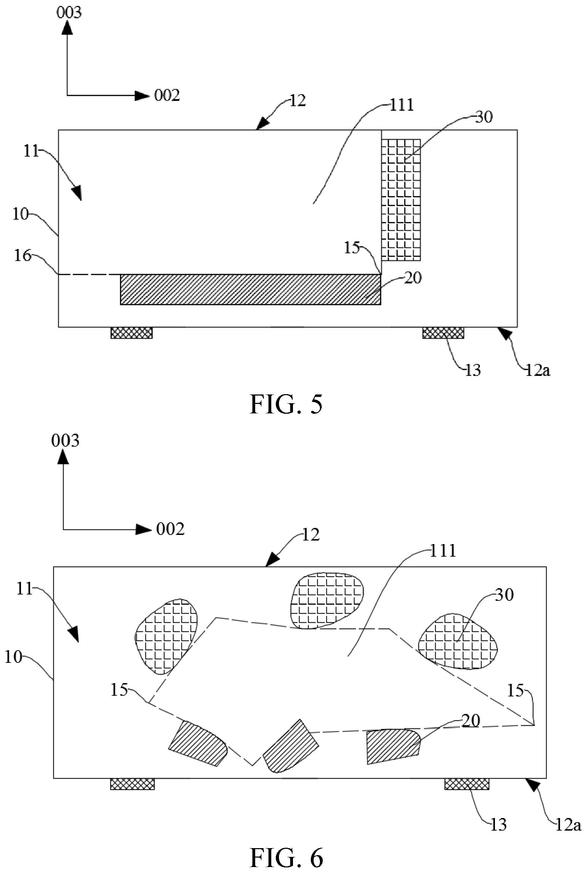

As shown in FIG. 5, in one embodiment, projections of the supporting member 20 and the bonding member 30 on the first surface 11 are each rectangular. The numbers of the supporting member 20 and the bonding member 30 are one each. The supporting member 20 is relatively close to the first side wall 12a. The supporting member 20 extends along the second direction 002, and the bonding member 30 extends along a third direction 003. The third direction 003 is the width direction of the battery assembly 100. An extension line of an edge of the supporting member 20 close to the geometric center of the first surface 11 intersects an edge of the first surface 11 to define a second intersection point 16, and an extension line of an edge of the bonding member 30 close to the geometric center of the first surface 11 also intersects an edge of the first surface 11 to define a second intersection point 16. Simultaneously, the extension lines of the edges of the supporting member 20 and the bonding member 30 close to the geometric center of the first surface 11 also intersect each other to define a first intersection point 15. The two second intersection points 16 and the first intersection point 15 are sequentially connected to define the clearance region 111. That is, the clearance region 111 at this time is a region enclosed by the dashed line portion in FIG. 5 together with the supporting member 20, the bonding member 30, and the edges of the first surface 11.

As shown in FIG. 6, in one embodiment, projections of the supporting members 20 and the bonding members 30 on the first surface 11 are each irregular shapes. The number of the supporting members 20 is three, and the number of the bonding members 30 is also three. The supporting members 20 are relatively close to the first side wall 12a, and the supporting members 20 are arbitrarily arranged. The bonding members 30 are also arbitrarily arranged. Extension lines of edges of a relatively close supporting member 20 and a bonding member 30 that are close to the geometric center of the first surface 11 intersect each other to define a first intersection point 15, the supporting members 20 are connected to each other, the bonding members 30 are connected to each other, and they are sequentially connected with the first intersection point 15 in a clockwise direction or a counterclockwise direction to enclose and define the clearance region 111. That is, the clearance region 111 at this time is a region enclosed by the dashed line portion in FIG. 6 together with the supporting members 20 and the bonding members 30.

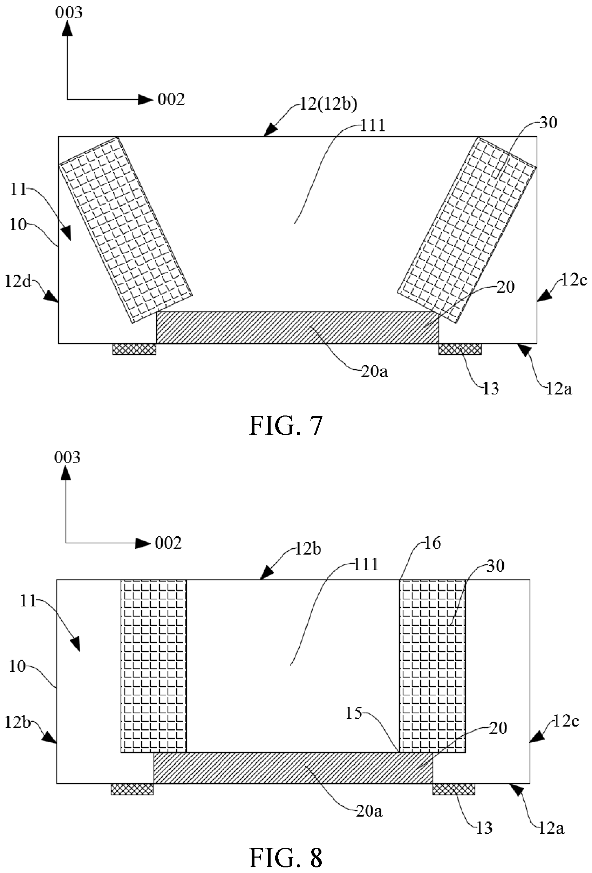

As shown in FIG. 8, in one embodiment, along the width direction of the battery assembly 100, i.e., along the third direction 003, the battery cell 10 has a second side wall 12b opposite to the first side wall 12a, the second side wall 12b being connected to the first surface 11 and arranged perpendicular thereto. The number of the supporting member 20 is one, and the number of the bonding members 30 is two. An extension line of an edge of the supporting member 20 close to the geometric center of the first surface 11 intersects extension lines of edges of the two bonding members 30 close to the geometric center of the first surface 11 to define two first intersection points 15, the extension lines of the edges of the two bonding members 30 close to the geometric center of the first surface 11 intersect an edge connected to the second side wall 12b to define two second intersection points 16, and the clearance region 111 is a region defined on the first surface 11 by connecting the two first intersection points 15 and the two second intersection points 16. That is, the clearance region 111 at this time is a region enclosed by the supporting member 20, the bonding members 30, and the second side wall 12b in FIG. 5.

It will be noted that the clearance region 111 in the above embodiments is only an exemplary introduction and does not represent the actual structure of the clearance region 111. That is, the clearance region 111 of the present disclosure can be adaptively adjusted according to the number, shape, and arrangement positions of the supporting members 20 and the bonding members 30, as long as the area ratio of the clearance region 111 to the first surface 11 is within a range of 3:20 to 18:25, and the present disclosure does not elaborate them one by one here.

It will be understood that, in the battery assembly 100 of the present disclosure, by disposing the supporting members 20 and the bonding members 30 on the first surface 11 and cooperating with the first surface 11 to together define the clearance region 111, relative fixation between two adjacent battery cells 10 is ensured, thereby preventing detachment between the stacked adjacent battery cells 10. Meanwhile, since the supporting members 20 and the bonding members 30 have a certain height, a gap is defined between opposing surfaces of the adjacent battery cells 10 to provide a certain reserved expansion space, thereby preventing the adjacent battery cells 10 from squeezing each other due to excessive expansion force and reducing the probability of lithium plating in the battery cells 10. At the same time, by setting the area ratio of the clearance region 111 to the surface of one of the battery cells 10 within a range of 3:20 to 18:25, reliability of the reserved expansion space is ensured, which can thus accommodate expansion of the battery cells 10 after a plurality of charge-discharge cycles, improving the performance and service life of the battery assembly 100 of the present disclosure.

In a preferred embodiment, the area ratio of the clearance region 111 to the first surface 11 is in a range of 1:5 to 11:20. Since the reserved expansion space provided within this range is sufficiently large, and the supporting effect of the supporting members 20 is relatively good while the bonding effect of the bonding members 30 is relatively stable, the probability of lithium plating in the battery cells 10 can be further reduced, and the performance and service life of the battery assembly 100 can be further improved.

In the above embodiments, the geometric center of the clearance region 111 coincides with the geometric center of the first surface 11. It will be understood that, based on the fact that bulging and expansion of the battery cell 10 usually occur in a central region of the battery cell 10, the geometric center of the clearance region 111 is set to coincide with the geometric center of the first surface 11 to ensure that the provided reserved expansion space works effectively.

In an embodiment disclosed in the present disclosure, the number of the supporting members 20 is plural, and the plurality of supporting members 20 are located between two adjacent battery cells 10 and provided on the first surface 11 close to the first side wall 12a. Meanwhile, a distance from each supporting member 20 to the side wall 12 of the battery cell 10 is smaller than a distance from the supporting member 20 to the geometric center of the first surface 11 of the battery cell 10, that is, a position of the supporting member 20 is farther from the geometric center of the first surface 11 of the battery cell 10 relative to the side wall 12. The supporting members 20 can provide physical spatial support for the two stacked adjacent battery cells 10, so that a certain gap exists between the two adjacent battery cells 10 to provide a certain reserved expansion space for the battery cells 10.

It will be noted that the number and positions of the supporting members 20 are only exemplary introductions and do not represent the actual number and positions of the supporting members 20. That is, the number and positions of the supporting members 20 can be adaptively adjusted according to actual application scenarios, as long as at least one supporting member 20 is provided close to the first side wall 12a.

In an embodiment disclosed in the present disclosure, the number of the bonding members 30 is two, and the two bonding members 30 are also located between two adjacent battery cells 10. The two bonding members 30 are provided on opposite sides of the geometric center of the first surface 11 of the battery cell 10 along the second direction 002, wherein the second direction 002 is parallel to the length direction of the first side wall 12a, i.e., the second direction 002 is the length direction of the battery assembly 100. The bonding member 30 also extends along the third direction 003, so that a projection of the bonding member 30 on the first surface 11 of the battery cell 10 is rectangular. The third direction 003 is the width direction of the battery assembly 100. Meanwhile, a distance from the bonding member 30 to the side wall 12 of the battery cell 10 is smaller than a distance from the bonding member 30 to the geometric center of the first surface 11 of the battery cell 10, that is, a position of the bonding member 30 is farther from the geometric center of the battery cell 10 relative to the side wall 12 of the battery cell 10. The bonding members 30 are used to bond the relatively close first surfaces 11 of the two battery cells 10, so as to limit relative displacement between the two adjacent battery cells 10 and prevent separation between the adjacent battery cells 10.

It will be noted that the shapes, numbers, and positions of the bonding members 30 are only exemplary introductions and do not represent the actual shapes, numbers, and positions of the bonding members 30. That is, the shapes, numbers, and positions of the bonding members 30 can be adaptively adjusted according to actual application scenarios, as long as the bonding members 30 can bond two adjacent battery cells 10.

In an embodiment disclosed in the present disclosure, based on the fact that a side of the battery cell 10 where the electrode terminal 13 is provided has a relatively larger weight, at least one supporting member 20 is provided at a position close to the first side wall 12a, i.e., a first supporting member 20a is provided, to ensure that the reserved expansion space defined in the clearance region 111 on the first surface 11 is relatively reliable.

In an embodiment disclosed in the present disclosure, the supporting member 20 may be made of polydimethylsiloxane material, so that the supporting member 20 has slight elasticity while also having strong rigid supporting capability. The bonding member 30 may be made of polybutyl acrylate to ensure that the bonding member 30 has strong adhesive force.

In one embodiment, a thickness of the supporting member 20 along the first direction 001 is in a range of 0.5 mm to 2 mm.

In one embodiment, a thickness of the bonding member 30 along the first direction 001 is in a range of 0.2 mm to 1 mm.

Reference is made to FIG. 7, which is a schematic planar structural view of one side of a battery assembly according to another embodiment of the present disclosure.

As shown in FIG. 2 and FIG. 7, in one embodiment, the explosion-proof valve 14 is provided at a middle portion of the first side wall 12a along the length direction of the battery assembly 100. The two electrode terminals 13 of the battery cell 10 are provided on opposite sides of the explosion-proof valve 14 along the second direction 002, and distances from the two electrode terminals 13 to the explosion-proof valve 14 are equal. The number of the supporting members 20 is one. That is, the supporting member 20 is configured as the first supporting member 20a. The battery cell 10 includes a third side wall 12c and a fourth side wall 12d oppositely provided along the second direction 002, and distances from two ends of the first supporting member 20a along the second direction 002 to the third side wall 12c and to the fourth side wall 12d are respectively equal. Alternatively, it will be appreciated that distances from the two ends of the first supporting member 20a along the second direction 002 to the two electrode terminals 13 may be respectively equal. That is, the first supporting member 20a is arranged at a middle position of the first surface 11 of the battery cell 10 along the length direction of the first side wall 12a.

It will be understood that, in this embodiment, by setting the number of the supporting members 20 to one and disposing it at the middle position of the first surface 11 of the battery cell 10 along the length direction of the first side wall 12a, reliable support of the supporting member 20 is ensured while the difficulty of installing the supporting member 20 can be simplified. In addition, based on the fact that the two electrode terminals 13 of the battery cell 10 are provided at opposite ends of the first side wall 12a, and the electrode terminals 13 of the same polarity of two adjacent battery cells 10 are connected by a connecting plate (not shown in the figures), disposing the supporting member 20 at the middle position of the battery cell 10 along the length direction of the first side wall 12a prevents distortion of the connecting plate caused by local squeezing of the battery cell 10, which would affect electrical connection between the battery cells 10.

In one embodiment, the supporting member 20 is rectangular, and along the length direction of the battery assembly 100, a ratio of a length of the supporting member 20 to a length of the first side wall 12a is in a range of 2:5 to 7:10. That is, a ratio of a length of the supporting member 20 along the second direction 002 to the length of the first side wall 12a is in a range of 2:5 to 7:10.

It will be understood that setting the length of the supporting member 20 along the second direction 002 within this ratio range can ensure the supporting effect of the supporting member 20 on the two adjacent battery cells 10, avoid the supporting member 20 being too small to provide support, resulting in insufficient reserved expansion space, and also avoid increasing cost by setting the supporting member 20 too large.

In one embodiment, a ratio of a distance from the geometric center of the supporting member 20 to the first side wall 12a to a distance from the geometric center of the supporting member 20 to the geometric center of the first surface 11 of the battery cell 10 is in a range of 0 to 4:5. It will be noted that the supporting member 20 arranged at this position can ensure that a sufficient reserved expansion space is provided in a central region of the first surface 11 of the battery cell 10, while ensuring reliable bonding between adjacent battery cells 10.

In one embodiment, along the length direction of the first side wall 12a, a ratio of a distance from the geometric center of the bonding member 30 to a side wall 12 relatively close thereto to a distance from the geometric center of the bonding member 30 to the geometric center of the first surface 11 of the battery cell 10 is in a range of 0 to 17:20. It will be noted that, in this embodiment, the bonding member 30 arranged at this position can ensure that a sufficient reserved expansion space is provided in the central region of the first surface 11 of the battery cell 10, while ensuring reliable bonding between adjacent battery cells 10.

In one embodiment, a ratio of a sum of projection areas of all the supporting members 20 on the first surface 11 of the battery cell 10 to the area of the first surface 11 of the battery cell 10 is in a range of 0.1% to 10%; a ratio of a sum of projection areas of all the bonding members 30 on the first surface 11 of the battery cell 10 to the area of the first surface 11 of the battery cell 10 is in a range of 20% to 70%.

It will be noted that, from the above data, it can be seen that the sum of the projection areas of the bonding members 30 on the first surface 11 of the battery cell 10 is larger than the sum of the projection areas of the supporting members 20 on the first surface 11 of the battery cell 10. Therefore, it can be ensured that an adhesive force of the bonding members 30 to the battery cell 10 is greater than a supporting force of the supporting members 20 to the battery cell 10, so as to ensure stability of stacking between two adjacent battery cells 10 and prevent detachment between the two adjacent battery cells 10. At the same time, it can also prevent the area occupied by the bonding members 30 on the first surface 11 of the battery cell 10 from being too large or the area occupied by the supporting members 20 on the first surface 11 of the battery cell 10 from being too small, which would result in insufficient reserved expansion space and affect heat dissipation.

In one embodiment, the number of the bonding members 30 is two, and the two bonding members 30 are spaced apart along the length direction of the battery assembly 100; the extension line of the edge of each bonding member 30 that is close to the geometric center of the first surface 11 has an included angle with the extension line of the edge of the first supporting member 20a that is close to the geometric center of the first surface 11, and the included angle is in a range of 60° to 100°. It will be understood that, based on the fact that the supporting member 20 and the bonding members 30 are all elongated, and since the supporting member 20 is arranged at the middle position of the battery cell 10 along the length direction of the first side wall 12a, setting the included angle between the extension line of the edge of the first supporting member 20a close to the geometric center of the first surface 11 and that of each bonding member 30 within a range of 60° to 100° ensures that a sufficient reserved expansion space is provided in the clearance region 111 on the first surface 11 of the battery cell 10, while ensuring reliable bonding between adjacent battery cells 10.

Reference is made to FIG. 8. In one embodiment, the two bonding members 30 are respectively in contact with the first supporting member 20a. That is, an area ratio of the clearance region 111 enclosed by the first supporting member 20a, the two bonding members 30, and a side edge of the first surface 11 (i.e., the second side wall 12b) on the first surface 11 of the battery cell 10 to the first surface 11 of the battery cell 10 is in a range of 3:20 to 18:25.

It will be understood that, in this embodiment, based on the fact that the supporting member 20 and the bonding members 30 are all elongated, setting the area ratio of the clearance region 111 enclosed by the supporting member 20 and the bonding members 30 on the first surface 11 of the battery cell 10 to the first surface 11 of the battery cell 10 within a range of 3:20 to 18:25 ensures a sufficient reserved expansion space, while also ensuring relatively reliable adhesive force between the two stacked adjacent battery cells 10.

In the embodiment shown in FIG. 8, projections of the first supporting member 20a and the bonding members 30 on the first surface 11 are each rectangular, and a length direction of the first supporting member 20a is perpendicular to a length direction of the bonding members 30. It will be understood that this configuration can make the shape of the clearance region 111 relatively regular, optimize layout of the supporting members 20 and the bonding members 30, and improve reliability of the clearance region 111. The length direction of the first supporting member 20a and the length direction of the bonding members 30 may be extending directions of the longest sides of the first supporting member 20a and the bonding members 30.

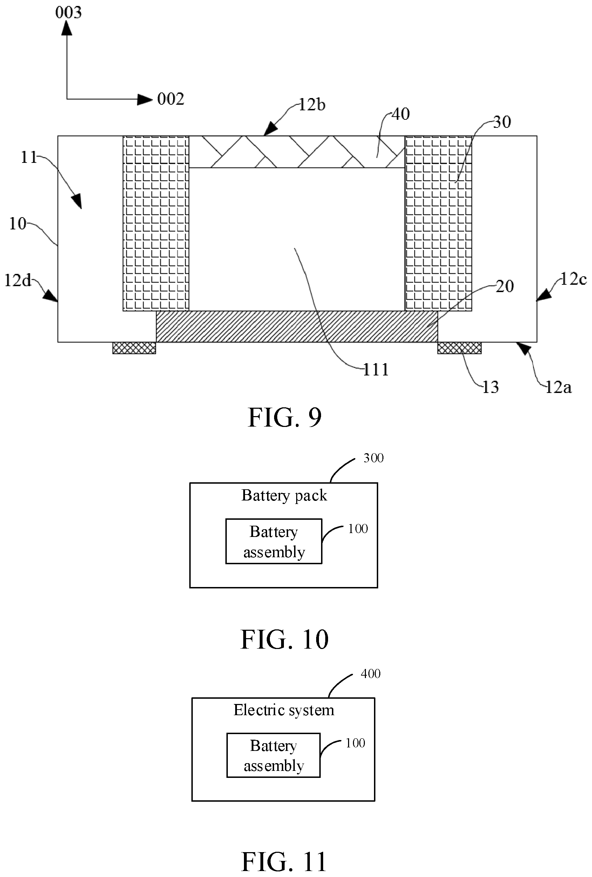

As shown in FIG. 9, in one embodiment, the battery assembly 100 further includes filling glue 40, and the filling glue 40 is provided between two adjacent battery cells 10. In one embodiment, the battery cell 10 includes a second side wall 12b opposite to the first side wall 12a along the third direction 003, and the filling glue 40 and the supporting member 20 close to the first side wall 12a are respectively provided on opposite sides of the geometric center of the first surface 11 of the battery cell 10 along the third direction 003. The filling glue 40 is provided closer to the second side wall 12b relative to the first side wall 12a.

It will be understood that, in this embodiment, the filling glue 40 can cooperate with the supporting member 20 to support the two stacked adjacent battery cells 10, so as to define a spacing height between the two adjacent battery cells 10 and enhance supporting stability. Furthermore, based on the fact that the filling glue 40 is provided closer to the second side wall 12b relative to the first side wall 12a, it is ensured that a sufficient reserved expansion space is provided in a central region of the first surface 11 of the battery cell 10. Meanwhile, based on the filling glue 40 having certain viscosity, the filling glue 40 can also assist the bonding members 30 in limiting relative displacement between the two adjacent battery cells 10.

In one embodiment, a ratio of an area of the clearance region 111 enclosed by the supporting member 20, the bonding members 30, and the filling glue 40 on the first surface 11 of the battery cell 10 to the area of the first surface 11 of the battery cell 10 is in a range of 1:5 to 11:20.

It will be noted that setting the ratio of the area of the clearance region 111 enclosed by the supporting member 20, the bonding members 30, and the filling glue 40 on the first surface 11 of the battery cell 10 to the area of the first surface 11 of the battery cell 10 within a range of 1:5 to 11:20 can provide a sufficient reserved expansion space while further improving adhesive force between adjacent battery cells 10.

In one embodiment, along the first direction 001, a height of the supporting members 20 is greater than or equal to a height of the bonding members 30, wherein the height of the supporting members 20 and the height of the bonding members 30 are dimensions thereof along the first direction 001, i.e., the vertical direction/stacking direction. It will be noted that, in an initial stage of stacking the battery cells 10, the height of the supporting members 20 is greater than the height of the bonding members 30 to ensure that a reserved expansion space is defined. During use of the battery cells 10, as the battery cells 10 expand to a certain extent, the adjacent battery cells 10 are bonded to define a sealed open window, and the height of the reserved expansion space at this time is the height of the bonding members 30. That is, setting the height of the supporting members 20 to be slightly greater than or equal to the height of the bonding members 30 can ensure that a sufficiently large reserved expansion space is provided in an early stage of the life cycle of the battery cells 10, preventing the battery cells 10 from being squeezed in the early stage of their life cycle, which would affect the service life of the battery cells 10.

The following describes beneficial effects that may be achieved by the battery assembly 100 of the present disclosure by comparing some embodiments of the battery assembly 100 of the present disclosure with a typical embodiment in the prior art.

It will be noted that, in the following embodiments, the number of the supporting members 20 is one, and the supporting member 20 is provided at a middle position of the battery cell 10 along the length direction of the first side wall 12a. Meanwhile, the number of the bonding members 30 is two, and the two bonding members 30 are provided on opposite sides of the geometric center of the first surface 11 of the battery cell 10 along the second direction 002, and the supporting member 20 and the bonding members 30 are arranged to enclose each other. Based on the fact that the supporting member 20 and the bonding members 30 are all elongated, an area enclosed by them on the first surface 11 of the battery cell 10 can be regarded as a trapezoid or a rectangle.

Especially, a is a distance between sides of the two bonding members 30 close to the supporting member 20 along the second direction 002; b is a distance between sides of the two bonding members 30 away from the supporting member 20 along the second direction 002; c is a length of the bonding members 30 along the third direction 003; A is a length of the battery cell 10 along the second direction 002; B is a length of the battery cell 10 along the third direction 003. By replacing the supporting member 20 and the bonding members 30 with different sizes or adjusting relative positions of the supporting member 20 and the bonding members 30, the values of a, b, and c can be changed, thereby obtaining different enclosed areas S1, i.e., reserved expansion spaces of different sizes. Reserved expansion area: S1 = (a + b) * c / 2; area of the first surface 11 of the battery cell 10: S2 = A * B. The battery assembly of the prior art and the battery assembly 100 of the present disclosure are subjected to kinetic performance tests under the same conditions. For example, the battery assembly 100 is charged and discharged cyclically at 28° C. After the cycle test is completed, electrode plates in the battery cells 10 are disassembled to observe lithium plating on the electrode plates. If a ratio of an area of lithium-plated electrode plate to an area of the electrode plate is less than 10%, it is considered mild lithium plating; if greater than 10% and less than 50%, it is considered moderate lithium plating; if greater than 50%, it is considered severe lithium plating.

The battery assembly of the prior art and the battery assembly 100 of the present disclosure are subjected to tensile shear strength tests under the same conditions. For example, a weight of 2 kg is placed on the battery assembly and held for 2 h. After a specified time, a tensile testing machine is used to clamp and fix both ends of the battery assembly, and one battery cell is pulled at a rate of 5 mm/min to test the maximum destructive tensile force. The tensile shear strength is obtained by dividing the maximum destructive tensile force by the bonding area, i.e., by the reserved expansion area S1. When the shear strength is greater than 5 MPa, the battery assembly meets the shear strength requirement; when it is less than 5 MPa, the requirement is not met.

Test results of the above experiments are summarized in Table 1 below:

**Table 1: wherein the units of a, b, c, A, and B are all mm; the units of the reserved expansion area S1 and the area S2 of the first surface 11 of the battery cell 10 are both mm²; the shear strength is in MPa.**

| | a/ mm | b/ mm | c/ mm | A/ mm | B/ mm | Reserved expansion area /mm² | Battery cell area /mm² | Reserved expansion area / Battery cell area | Kinetic performance | Shear strength /MPa |
|---|---|---|---|---|---|---|---|---|---|---|
| Embodiment1 | 66 | 100 | 146 | 171 | 165 | 12118 | 28215 | 0.429 | mild lithium plating | 8.25 |
| Embodiment2 | 50 | 120 | 132 | 171 | 165 | 11220 | 28215 | 0.398 | mild lithium plating | 8.91 |
| Embodiment3 | 70 | 70 | 149 | 171 | 165 | 10430 | 28215 | 0.370 | mild lithium plating | 9.59 |
| Embodiment4 | 85 | 134 | 120 | 171 | 165 | 13140 | 28215 | 0.466 | mild lithium plating | 7.61 |
| Embodiment5 | 45 | 85 | 118 | 171 | 165 | 7670 | 28215 | 0.272 | mild lithium plating | 13.04 |
| Embodiment6 | 118 | 132 | 136 | 171 | 165 | 17000 | 28215 | 0.603 | mild lithium plating | 5.88 |
| Embodiment7 | 95 | 45 | 129 | 171 | 165 | 9030 | 28215 | 0.320 | mild lithium plating | 11.07 |
| Embodiment8 | 118 | 105 | 134 | 171 | 165 | 14941 | 28215 | 0.530 | mild lithium plating | 6.69 |
| Embodiment9 | 86 | 145 | 138 | 171 | 165 | 15939 | 28215 | 0.565 | mild lithium plating | 6.27 |
| Embodiment10 | 5 | 120 | 125 | 171 | 165 | 7812.5 | 28215 | 0.277 | mild lithium plating | 12.8 |
| Embodiment11 | 63 | 65 | 69 | 171 | 165 | 4416 | 28215 | 0.157 | mild lithium plating | 22.64 |
| Embodiment12 | 59 | 85 | 121 | 171 | 165 | 8712 | 28215 | 0.309 | mild lithium plating | 11.48 |
| Embodiment13 | 125 | 127 | 133 | 171 | 165 | 16758 | 28215 | 0.594 | mild lithium plating | 5.97 |
| Embodiment14 | 18 | 98 | 105 | 171 | 165 | 6090 | 28215 | 0.216 | mild lithium plating | 16.42 |
| Embodiment15 | 23 | 89 | 119 | 171 | 165 | 6664 | 28215 | 0.236 | mild lithium plating | 15.01 |
| Embodiment16 | 49 | 49 | 103 | 171 | 165 | 5047 | 28215 | 0.179 | mild lithium plating | 19.71 |
| Embodiment17 | 132 | 139 | 147 | 171 | 165 | 19918.5 | 28215 | 0.706 | mild lithium plating | 5.12 |
| Embodiment18 | 135 | 141 | 142 | 171 | 165 | 19596 | 28215 | 0.695 | mild lithium plating | 5.5 |
| Embodiment19 | 100 | 137 | 146 | 171 | 165 | 17301 | 28215 | 0.613 | mild lithium plating | 5.78 |
| Comparative example1 | 139 | 140 | 152 | 171 | 165 | 21204 | 28215 | 0.752 | mild lithium plating | 4.72 |
| Comparative example2 | 132 | 143 | 149 | 171 | 165 | 20487.5 | 28215 | 0.726 | mild lithium plating | 4.95 |
| Comparative example3 | 152 | 142 | 154 | 171 | 165 | 22638 | 28215 | 0.802 | mild lithium plating | 4.42 |
| Comparative example4 | 10 | 40 | 53 | 171 | 165 | 1325 | 28215 | 0.047 | severe lithium plating | 75.47 |
| Comparative example5 | 18 | 50 | 82 | 171 | 165 | 2788 | 28215 | 0.099 | moderate lithium plating | 35.87 |
| Comparative example6 | 49 | 50 | 85 | 171 | 165 | 4207.5 | 28215 | 0.149 | moderate lithium plating | 23.77 |
| Comparative example7 | 0 | 0 | 0 | 171 | 165 | 0 | 28215 | 0.000 | severe lithium plating | |

It can be seen from the above embodiments that, since the battery assembly in the prior art is not provided with supporting members and bonding members cooperating to define a reserved expansion space, the kinetic performance results show that severe lithium plating occurs. Referring to Comparative Examples 1 to 7 and Embodiments 1 to 19, it can be seen that when the ratio of the set reserved expansion area to the area of the first surface of the battery cell is less than 0.15, the kinetic performance results show that moderate lithium plating and severe lithium plating occur; when the ratio of the set reserved expansion area to the area of the first surface of the battery cell is in a range of 0.15 to 0.72, the kinetic performance results show that only mild lithium plating occurs; when the ratio of the set reserved expansion area to the area of the first surface of the battery cell is greater than 0.72, the kinetic performance results show that mild lithium plating occurs. Therefore, when the ratio of the reserved expansion area (i.e., the area of the clearance region) to the area of the first surface of the battery cell is greater than 0.15, it can be ensured that the battery cell has a good expansion space, reducing the problem of lithium plating caused by expansion of the battery cell.

Referring again to Comparative Examples 1 to 7 and Examples 1 to 19, it can be seen that when the ratio of the reserved expansion area (i.e., the area of the clearance region) to the area of the first surface of the battery cell is greater than 0.72, the shear strength of Comparative Examples 1 to 3 is below 5, and thus during vibration testing or when subjected to impact, the top battery cell is prone to movement or even detachment. Therefore, when the ratio of the reserved expansion area (i.e., the area of the clearance region) to the area of the first surface of the battery cell is less than 0.72, it can be ensured that the battery cell has good stability. In the present disclosure, by setting the ratio of the reserved expansion area to the area of the first surface of the battery cell in a range of 0.15 to 0.72, a sufficient reserved space is provided for expansion of the battery cell, preventing the battery cells from squeezing each other, thereby reducing the probability of lithium plating and improving the performance and service life of the battery assembly. Meanwhile, it can be seen from the above data that, with the ratio of the reserved expansion area to the area of the first surface of the battery cell set in a range of 0.15 to 0.72 in the present disclosure, good shear resistance is also achieved, i.e., two stacked adjacent battery cells are firmly bonded and not prone to movement, thereby improving the stability between the two adjacent battery cells, and further improving the performance and service life of the battery assembly.

Reference is made to FIG. 10. The present disclosure further provides a battery pack 300, which includes the above-mentioned battery assembly 100. Specifically, the battery pack 300 includes a tray and a sealing cover, which together enclose an accommodating cavity, and the battery assembly 100 is located within the accommodating cavity.

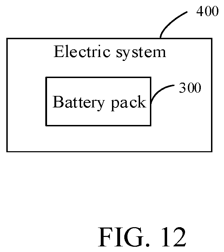

Reference is made to FIG. 11 and FIG. 12. Furthermore, the present disclosure further provides an electric system 400, which includes the above-mentioned battery assembly 100 or the above-mentioned battery pack 300. For example, as shown in FIG. 11, the electric system 400 includes the above-mentioned battery assembly 100; as shown in FIG. 12, the electric system 400 includes the above-mentioned battery pack 300. Specifically, the electric system 400 may be the aforementioned vehicle 200, or the electric system 400 may be an energy storage system.

As shown in FIG. 1, the vehicle 200 provided in the present disclosure includes a vehicle body 201 and the battery assembly 100. The battery assembly 100 is received and fixed within the vehicle body 201, and is used to provide electrical energy to the vehicle 200 to drive the vehicle 200. It will be understood that the battery assembly 100 of the present disclosure is applicable to electric vehicles, including pure electric vehicles and hybrid electric vehicles.

It will be understood that the terms "first", "second", etc. are only used for descriptive purposes and cannot be construed as indicating or implying relative importance or implicitly indicating the number of technical features indicated. Thus, features defined with "first" and "second" may explicitly or implicitly include one or more of said features. In the description of the embodiments of the present disclosure, "plurality" means two or more, unless otherwise expressly and specifically defined.

In the description of this specification, description with reference to the terms "one embodiment", "some embodiments", "exemplary embodiment", "example", or "some examples", etc., means that specific features, structures, materials, or characteristics described in connection with the embodiment or example are included in at least one embodiment or example of the present disclosure. In this specification, schematic representations of the above terms do not necessarily refer to the same embodiment or example. Furthermore, the described specific features, structures, materials, or characteristics may be combined in any suitable manner in any one or more embodiments or examples.

It will be understood that the application of the present disclosure is not limited to the above examples. Those of ordinary skill in the art can make improvements or modifications based on the above description, and all such improvements and modifications shall fall within the protection scope of the appended claims of the present disclosure. Those of ordinary skill in the art will understand that all or part of the processes of implementing the above embodiments can be implemented, and equivalent changes made according to the claims of the present disclosure shall still fall within the scope covered by the present disclosure.

## Claims

1. A battery assembly (100), comprising:
a plurality of battery cells (10) stacked in a vertical direction; a surface of one of two adjacent battery cells (10) being a first surface (11), the first surface (11) having a clearance region (111), and a geometric center of the first surface (11) being located within the clearance region (111); and
supporting members (20) and bonding members (30), the supporting members (20) and the bonding members (30) being provided on the first surface (11), and edges of the supporting members (20) and the bonding members (30) that are close to the geometric center of the first surface (11) coinciding with a part of a periphery of the clearance region (111);
extension lines of edges of each supporting member (20) and each bonding member (30) that are close to the geometric center of the first surface (11) intersecting each other to define first intersection points (15), and/or intersecting an edge of the first surface (11) to define second intersection points (16);
if the intersection points are all the second intersection points (16), the clearance region (111) being a region enclosed by connecting the plurality of second intersection points (16);
if the intersection points comprise several first intersection points (15) and several second intersection points (16), and the first intersection points (15) are configured to be sequentially connected to define a closed figure on the first surface, the clearance region (111) being a region enclosed by connecting the plurality of first intersection points;
if the intersection points comprise several first intersection points (15) and several second intersection points (16), and the first intersection points (15) are configured not to be sequentially connected to define a closed figure on the first surface (11), the clearance region (111) being a region enclosed by sequentially connecting all the first intersection points (15) and the several second intersection points (16);
an area ratio of the clearance region (111) to the first surface (11) being in a range of 3:20 to 18:25.

2. The battery assembly (100) according to claim 1, wherein the area ratio of the clearance region (111) to the first surface (11) is in a range of 1:5 to 11:20.

3. The battery assembly (100) according to claim 1 or 2, wherein each battery cell (10) comprises a first side wall (12a), the first side walls (12a) of all the battery cells (10) are located on a same side of the battery assembly (100), the first side wall (12a) is perpendicular to the first surface (11), the battery cell (10) comprises an electrode terminal (13), the electrode terminal (13) is provided on the first side wall (12a), the supporting member (20) comprises a first supporting member (20a), and the first supporting member (20a) is provided close to the first side wall (12a).

4. The battery assembly (100) according to claim 3, wherein the number of the electrode terminals (13) is two, the two electrode terminals (13) are spaced apart along a length direction of the battery assembly (100), the number of the supporting members (20) is one, the first supporting member (20a) comprises two ends along the length direction of the battery assembly (100), and distances from the two ends of the first supporting member (20a) to the two electrode terminals (13) are respectively equal.

5. The battery assembly (100) according to claim 3, wherein the number of the bonding members (30) is two, and the two bonding members (30) are spaced apart along the length direction of the battery assembly (100); an extension line of the edge of each bonding member (30) close to the geometric center of the first surface (11) has an included angle with an extension line of an edge of the first supporting member (20a) close to the geometric center of the first surface (11), and the included angle is in a range of 60° to 100°.

6. The battery assembly (100) according to claim 5, wherein the first side wall (12a) is located at one end of the battery cell (10) in a width direction of the battery assembly (100), along the width direction of the battery assembly (100), the first supporting member (20a) is provided on a side of the clearance region (111) close to the first side wall (12a), along the length direction of the battery assembly (100), one bonding member (30) is respectively provided on each of two opposite sides of the clearance region (111) in the length direction of the battery assembly (100), and the two bonding members (30) are respectively in contact with the first supporting member (20a).

7. The battery assembly (100) according to any one of claims 3 to 6, wherein projections of the first supporting member (20a) and the bonding members (30) on the first surface (11) are each rectangular, and a length direction of the first supporting member (20a) is perpendicular to a length direction of the bonding members (30).

8. The battery assembly (100) according to claim 5 or 6, wherein along the width direction of the battery assembly (100), the battery cell (10) has a second side wall (12b) opposite to the first side wall (12a), the second side wall (12b) being connected to the first surface (11) and arranged perpendicular thereto;
an extension line of the edge of the supporting member (20) close to the geometric center of the first surface (11) intersects the extension lines of edges of the two bonding members (30) close to the geometric center of the first surface (11) to define two first intersection points (15), extension lines of edges of the two bonding members (30) close to the geometric center of the first surface (11) intersect an edge connected to the second side wall (12b) to define two second intersection points (16), and the clearance region (111) is a region defined on the first surface (11) by connecting the two first intersection points (15) and the two second intersection points (16).

9. The battery assembly (100) according to any one of claims 1 to 8, wherein a ratio of a sum of projection areas of all the supporting members (20) on the first surface (11) to the area of the first surface (11) is in a range of 0.1% to 10%.

10. The battery assembly (100) according to any one of claims 1 to 8, wherein a ratio of a sum of projection areas of all the bonding members (30) on the first surface (11) to the area of the first surface (11) is in a range of 20% to 70%.

11. The battery assembly (100) according to any one of claims 1 to 8, wherein a height of the supporting members (20) is greater than or equal to a height of the bonding members (30), wherein the height is a dimension in the vertical direction.

12. The battery assembly (100) according to any one of claims 4 to 8, wherein the battery assembly (100) further comprises filling glue (40), the filling glue (40) being arranged between two adjacent battery cells (10).

13. The battery assembly (100) according to claim 12, wherein the battery cell (10) comprises a second side wall (12b) opposite to the first side wall (12a), the filling glue (40) being provided close to the second side wall (12b).

14. A battery pack, comprising the battery assembly (100) according to any one of claims 1 to 13.

15. An electric system, comprising the battery assembly (100) according to any one of claims 1 to 13, or comprising the battery pack according to claim 14.
